# EUROPEAN PATENT APPLICATION

(11) **EP 4 207 356 A1**
(43) Date of publication of application: **05.07.2023**
(21) Application number: 21861463.4
(22) Date of filing: 23.08.2021
(51) Int. Cl.: H01M 4/131, H01M 4/525, H01M 10/052, H01M 10/0567, H01M 10/0569

(54) **NONAQUEOUS ELECTROLYTE SECONDARY BATTERY**

(30) Priority: 31.08.2020 JP 2020146067
(71) Applicant: Panasonic Intellectual Property Management Co., Ltd., Osaka-shi, Osaka 540-6207 (JP)
(72) Inventor: FUJITOMO, Chisaki, Chuo-ku, Osaka-shi, Osaka 540-6207 (JP); ISHIGURO, Tasuku, Chuo-ku, Osaka-shi, Osaka 540-6207 (JP)
(74) Representative: Novagraaf International SA
(86) International application number: PCT/JP2021/030718
(87) International publication number: WO 2022/045037

(57) **Abstract**

The non-aqueous electrolyte secondary battery includes a positive electrode, a negative electrode, a separator interposed between the positive electrode and the negative electrode, and an electrolyte. The electrolyte includes an organic sulfuric acid salt represented by a formula (1): (R-O-SO₃)ₙX1, where R is an organic group with 1 or more carbon atoms, X1 is a cation, and n is an integer of 1 to 3. The electrolyte further includes ethylene carbonate and fluoroethylene carbonate. The ethylene carbonate volume Vec and the fluoroethylene carbonate volume Vfec satisfy 0.1 ≤ Vec/Vfec ≤ 15.

## Description

### [Technical Field]

The present disclosure relates to a non-aqueous electrolyte secondary battery.

### [Background Art]

Non-aqueous electrolyte secondary batteries, particularly lithium ion secondary batteries, are expected as a power source for small consumer applications, power storage devices, and electric vehicles, because of their high output and high energy density. Meanwhile, with a rapid gain in popularity of non-aqueous electrolyte secondary batteries, an importance of quick charge characteristics has been increasing.

Patent Literature 1 has proposed a positive electrode active material particularly suitable for use in lithium ion secondary batteries for driving vehicles in which internal resistance of batteries is decreased, and high rate charging/discharging and high outputs are required: the positive electrode active material including a base portion composed of a compound capable of storing and releasing a charge carrier, a dielectric disposed at at least a portion of the base portion surface, and a carbonate compound disposed at at least a portion of the base portion surface.

### [Citation List]

### [Patent Literature]

PLT1: Japanese Laid-Open Patent Publication No. 2020-123500

### [Summary of Invention]

The decrease in the positive electrode resistance allows for the positive electrode active material to be charged deeper during charging, and therefore the positive electrode potential increases easily. Therefore, the oxidation and decomposition of the electrolyte is accelerated during charge/discharge cycles, increasing the positive electrode resistance, which may reduce durability (capacity retention rate).

In view of the above, an aspect of the present disclosure relates to a non-aqueous electrolyte secondary battery including a positive electrode, a negative electrode, a separator interposed between the positive electrode and the negative electrode, and an electrolyte, wherein, the electrolyte includes an organic sulfuric acid salt represented by a formula (1): (R-O-SO₃)ₙX1,
where R is an organic group with 1 or more carbon atoms, X1 is a cation, n is an integer of 1 to 3, the electrolyte further includes ethylene carbonate and fluoroethylene carbonate, and 0.1 ≤ Vec/Vfec ≤ 15 is satisfied, the Vec being an ethylene carbonate volume and the Vfec being a fluoroethylene carbonate volume.

The present disclosure allows for decrease in the positive electrode resistance, and improvement in durability of non-aqueous electrolyte secondary batteries.

### [Brief Description of Drawings]

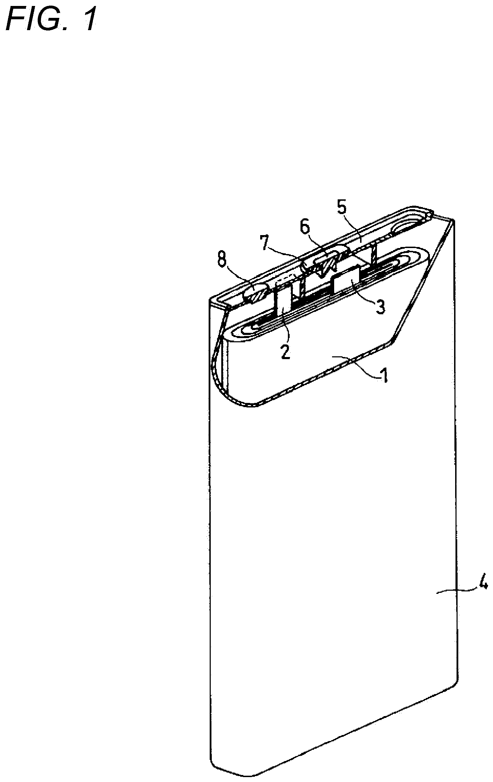

[FIG. 1] FIG. 1 is a schematic partially cutaway oblique view of a secondary battery in an embodiment of the present disclosure.

### [Description of Embodiments]

The non-aqueous electrolyte secondary battery of the embodiment of the present disclosure includes a positive electrode, a negative electrode, a separator interposed between the positive electrode and the negative electrode, and an electrolyte. The positive electrode includes a positive electrode active material. The positive electrode active material is, for example, a lithium-containing composite oxide, and includes a transition metal.

The electrolyte includes an organic sulfuric acid salt represented by a formula (1): (R-O-SO₃)ₙX1. R is an organic group with 1 or more carbon atoms, X1 is a cation, and n is an integer of 1 or more and 3 or less.

The organic sulfuric acid salt works to prevent a high resistance coating to be formed on the positive electrode active material surface. The high resistance coating is composed of components generated from oxidation and decomposition of the electrolyte, and components of deteriorated positive electrode active material. This mechanism is brought out by delocalization of negative charge of the organic sulfuric acid anions, which are produced by ionization of the organic sulfuric acid salt in the electrolyte.

First, the organic sulfuric acid anions (R-O-SO₄⁻) with delocalized negative charge are coordinated to a highly oxidized positive electrode active material (particularly highly oxidized transition metal ion). As a result, the positive electrode active material surface is protected by the organic sulfuric acid anion (R-O-SO₄⁻), and side reactions between the positive electrode active material and the electrolyte are suppressed. That is, the surface protection suppresses the increase in the positive electrode resistance, and battery reactions are prioritized and progress. Thus, even when the non-aqueous electrolyte secondary battery is quickly charged, the charge acceptance of the positive electrode is improved (that is, quick charge characteristics are improved).

Also, the R-O-SO₄⁻ion effectively works for a highly oxidized positive electrode active material, and therefore even if the positive electrode active material is deeply charged as a result of decreased positive electrode resistance, side reactions between a high potential positive electrode (highly oxidized positive electrode active material) and the electrolyte are suppressed. Therefore, even in the process of charge/discharge cycles, formation of a high resistance coating on the positive electrode is suppressed, which improves battery durability.

Even when R-O-SO₄⁻ion effectively works, when a positive electrode active material is charged deeply, it may become difficult to suppress side reactions between the electrolyte and the positive electrode active material. For example, when an average potential of the positive electrode is high, the positive electrode active material may be excessively oxidized in portions compared with the average value. Thus, it is important to select an electrolyte component that is hardly oxidized in a high potential positive electrode (highly resistant to oxidation). In other words, presence or absence of the organic sulfuric acid salt in the electrolyte makes a great difference in terms of the degree of improvement in battery durability due to an electrolyte component with high oxidation resistance.

The electrolyte includes ethylene carbonate (EC) and fluoroethylene carbonate (FEC). EC is a component that forms a low- resistance solid electrolyte interface (SEI) in the negative electrode, and is considered to take an important role in decreasing battery internal resistance. Meanwhile, EC has a slightly low oxidation resistance relative to a high potential positive electrode, and when charge/discharge cycles are repeated, by which the positive electrode is charged to a high potential, oxidation and decomposition progress gradually, which may produce a high resistance coating on the positive electrode. FEC has a structure in which one hydrogen of EC is replaced with fluorine, and has excellent oxidation resistance compared with EC, and expected to form a low resistance inorganic coating including a fluorine salt (e.g., LiF) on the negative electrode. By including FEC at a predetermined ratio in the electrolyte, even when the positive electrode has a high potential, oxidation and decomposition of EC is significantly suppressed. Then, the effects of suppression of decomposition of EC and improvement in battery durability are clearly shown when the organic sulfuric acid salt is present in the electrolyte.

To improve battery durability more significantly, the EC volume Vec and the FEC volume Vfec contained in the electrolyte have to satisfy 0.1 ≤ Vec/Vfec ≤ 15. To improve battery durability even more significantly, 0.1 ≤ Vec/Vfec ≤ 12 or 0.1 ≤ Vec/Vfec ≤ 5 is preferably satisfied, or 0.1 ≤ Vec/Vfec ≤ 4 may be satisfied, or 0.1 ≤ Vec/Vfec ≤ 2 may be satisfied.

In the organic sulfuric acid salt represented by the formula (1), cation X1 is not particularly limited, as long as it can form a salt which dissociates in the electrolyte. Cation X1 with a valency of 1 to 3 will suffice, but a cation (n = 2) with a valency of 2 or less is preferable, and a monovalent cation (n = 1) is more preferable. For example, for cation X1, alkali metal ion or NH₄⁺ may be used. Among them, sodium ion, lithium ion, and the like are preferable, because they can go through ionization easily, are easily available, and have less effects on increase in the electrolyte viscosity.

In the organic sulfuric acid salt represented by the formula (1), R may be an alkyl group with, for example, a number of carbon atoms of 1 or more and 6 or less, but when R has a high number of carbon atoms, not only the effects of suppressing side reactions by protecting the highly oxidized positive electrode active material, but battery reaction itself may be inhibited. Preferably, in view of efficiently suppressing side reactions and accelerating battery reactions, R has a number of carbon atoms of 1 to 3, particularly preferably 1 or 2. Specific examples of such organic sulfuric acid salts satisfying these conditions include lithium methyl sulfate, sodium methyl sulfate, lithium ethyl sulfate, and sodium ethyl sulfate. In particular, lithium ethyl sulfate and sodium ethyl sulfate are preferable. A kind of organic sulfuric acid salt may be used singly, or two or more kinds thereof may be used in combination.

The electrolyte has an organic sulfuric acid salt content C1 of, for example, 0.1 mass% or more and 5 mass% or less, 0.5 mass% or more and 5 mass% or less, or 0.5 mass% or more and 3 mass% or less.

The electrolyte may further include a fluorosulfonic acid salt represented by a formula (2): (F-SO₃)ₘX2. X2 is a cation, and m is an integer of 1 to 3. The fluorosulfonic acid salt goes through ionization in the electrolyte to produce F-SO₃⁻ ions with delocalized negative charge, and therefore similarly with the organic sulfuric acid salt, considered to protect the highly oxidized positive electrode active material surface, and suppress side reactions between the high potential positive electrode and the electrolyte. However, with the fluorosulfonic acid salt alone, the positive electrode active material surface cannot be protected sufficiently, and the effects of suppressing increase in the positive electrode resistance do not clearly appear. Meanwhile, when the organic sulfuric acid salt and the fluorosulfonic acid salt are used in combination, the fluorosulfonic acid anion protects portions where the organic sulfuric acid anion cannot protect, and increase in the positive electrode resistance is suppressed more significantly.

In the fluorosulfonic acid salt represented by the formula (2), cation X2 is not particularly limited, as long as it can form a salt which dissociates in the electrolyte. Cation X2 with a valency of 1 to 3 will suffice, but a cation (m = 2) with a valency of 2 or less is preferable, and a monovalent cation (m = 1) is more preferable. For example, for cation X2, alkali metal ion or NH₄⁺ may be used. Preferably, lithium ion is used because it can go through ionization easily and has less effects on increase in the electrolyte viscosity. A kind of fluorosulfonic acid salt may be used singly, or two or more kinds thereof may be used in combination.

The electrolyte has a fluorosulfonic acid salt content C2 of, for example 0.5 mass% or more and 5 mass% or less, or 0.5 mass% or more and 3 mass% or less.

The electrolyte has a mass ratio: C2/C1 of the fluorosulfonic acid salt content C2 to the organic sulfuric acid salt content C1 satisfying, for example, 0 ≤ C2/C1 ≤ 3, 0 < C2/C1 ≤ 2, 0.05 ≤ C2/C1 ≤ 1.5, or 0.5 ≤ C2/C1 ≤ 1.5.

The positive electrode active material may include, for example, a lithium-containing composite oxide having a layered rock salt type crystal structure, and in which 80 atom% or more of metals other than lithium is nickel. Generally, a positive electrode active material having a high nickel content has a high capacity, but the greater the nickel content, easier for the composite oxide to deteriorate, and easier for the battery durability to be reduced. In the composite oxide, nickel is present with a valency of 3 or 4 to contribute to charge/discharge, but it is stable as an element with a valency of 2. The reaction to have the valency of 2 is an irreversible reaction. Nickel with a valency of 4 contained in a highly oxidized composite oxide easily go through side reactions to be reduced strongly to have a valency of 2. When a nickel oxide (NiO) layer is formed on the positive electrode active material surface, the positive electrode resistance increases, and battery durability is reduced. On the other hand, when the electrolyte contains the organic sulfuric acid salt, R-O-SO₄⁻ ion (organic sulfuric acid anion) is coordinated to nickel with a valency of 4 to protect the 4-valency nickel. Thus, the effects of reducing the positive electrode resistance by the organic sulfuric acid salt, and the effects of improving battery durability are brought out the most when a positive electrode active material having a high nickel content is used.

The lithium-containing composite oxide may be a lithium-nickel composite oxide represented by, for example, a chemical formula LiₐNiₓM₁₋ₓO_{2-δ} (where 0 < a ≤ 1.2, 0.8 ≤ x< 1, 0 ≤ δ ≤ 0.05, and M includes at least one selected from the group consisting of Mn, Fe, Ti, Si, Nb, Zr, Mo, Co, Al, Zn, W, Sr, and Ca). The Ni ratio x in the above-described chemical formula may be 0.85 or more (0.85 ≤ x), or 0.90 or more (0.90 ≤ x).

In the lithium-nickel composite oxide, M may include at least one element selected from the group consisting of Mn, Fe, Ti, Si, Nb, Zr, Mo, Co, Al, and Zn, and at least one element selected from the group consisting of W, Sr, and Ca. By containing at least one of W, Sr, and Ca in the composite oxide, the composite oxide surface structure is stabilized, and deterioration of the positive electrode active material can be suppressed even more effectively. In the composite oxide, W, Sr, and Ca concentrated near the surface of the composite oxide, i.e., positive electrode active material, are effective.

Next, a non-aqueous electrolyte secondary battery of the embodiment of the present disclosure is described in detail.

### [Positive Electrode]

The positive electrode has a positive electrode current collector and a positive electrode mixture layer formed on a surface of the positive electrode current collector and having a positive electrode active material. The positive electrode mixture layer can be formed by applying a positive electrode slurry in which the positive electrode mixture is dispersed in a dispersion medium on a surface of the positive electrode current collector, and drying the slurry, the positive electrode mixture including the positive electrode active material as an essential component, and a binder, thickener, and conductive material as optional components. The dried coating film may be rolled, if necessary. For the positive electrode active material, binder, thickener, and conductive material, known materials can be used.

The lithium-containing composite oxide to be used as the positive electrode active material is, for example, a plurality of primary particles coagulated to form secondary particles. The primary particles has a particle size of, generally 0.05 µm to 1 µm. The composite oxide has an average particle size of, for example, 3 µm to 30 µm, preferably 5 µm to 25 µm. Here, the average particle size of the composite oxide means a median diameter (D50) at which cumulative frequency is 50% in a volume-based particle size distribution measured with a laser diffraction particle size distribution analyzer.

The amount of the elements contained and forming the composite oxide can be measured by an inductively coupled plasma emission spectroscopic analyzer (ICP-AES), electron beam micro analyzer (EPMA), energy dispersive X-ray analyzer (EDX), etc.

For the positive electrode current collector, a nonporous conductive substrate (metal foil, etc.), or a porous conductive substrate (mesh-body, net-body, punched sheet, etc.) is used. Examples of the material for the positive electrode current collector include stainless steel, aluminum, aluminum alloy, titanium, or the like.

### [Negative Electrode]

The negative electrode includes, for example, a negative electrode current collector, and a negative electrode active material layer formed on the surface of the negative electrode current collector. The negative electrode active material layer can be formed, for example, by applying a negative electrode slurry on the negative electrode current collector surface, and drying the coating, the negative electrode slurry having a negative electrode mixture dispersed in a dispersion medium, and including a negative electrode active material as an essential component, and a binder, thickener, and conductive material as optional components. The dried coating film may be rolled, if necessary. That is, the negative electrode active material can be a mixture layer. A lithium metal foil or a lithium alloy foil may be attached to the negative electrode current collector. For the negative electrode active material, binder, conductive material, and thickener, known materials can be used.

The negative electrode active material contains a material that electrochemically stores and releases lithium ions, a lithium metal, a lithium alloy, and the like. For the material that electrochemically stores and releases lithium ions, a carbon material, an alloy based material, and the like are used. Examples of the carbon material include, graphite, graphitizable carbon (soft carbon), and non-graphitizable carbon (hard carbon). For the alloy based material, examples thereof include silicon, tin, a silicon alloy, a tin alloy, and a silicon compound.

For the negative electrode current collector, a non-porous conductive substrate (metal foil, etc.), or a porous conductive substrate (mesh-body, net-body, punched sheet, etc.) is used. Examples of the material for the negative electrode current collector include stainless steel, nickel, nickel alloy, copper, copper alloy, or the like.

### [Electrolyte]

The electrolyte includes a solvent and a solute dissolved in the solvent. The solute is an electrolytic salt that goes through ion dissociation in electrolytes. The solute includes an organic sulfuric acid salt and a fluorosulfonic acid salt, but the organic sulfuric acid salt and the fluorosulfonic acid salt are generally treated as additives. The main component of the solute is a lithium salt.

For the solvent, known materials can be used. For the solvent, for example, cyclic carbonate, chain carbonate, cyclic carboxylate, chain carboxylate, etc. are used. Examples of the cyclic carbonate include propylene carbonate (PC), ethylene carbonate (EC), fluoroethylene carbonate (FEC), vinylene carbonate (VC), and the like. Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), ethyl propionate (EP), and the like. A kind of non-aqueous solvent may be used singly, or two or more kinds thereof may be used in combination.

The solvent include EC and FEC as essential components. Preferably, a total volume of EC and FEC in the entire solvent is 10 vol% or more and 30 vol% or less, and more preferably 15 vol% or more and 25 vol% or less. For the solvent used with EC and FEC, chain carbonate is preferable in terms of easily adjusting the electrolyte viscosity to a suitable level. The total volume of the EC, FEC, and the chain carbonate in the entire solvent is preferably 80 vol% or more, and may be 100 vol%.

For the lithium salt other than the organic sulfuric acid salt and fluorosulfonic acid salt, for example, lithium salts of chlorine-containing acid (LiClO₄, LiAlCl₄, LiB₁₀Cl₁₀, etc.), lithium salts of fluorine-containing acid (LiPF₆, LiPF₂O₂, LiBF₄, LiSbF₆, LiAsF₆, LiCF₃SO₃, LiCF₃CO₂, etc.), lithium salts of fluorine-containing acid imide (LiN (FSO₂)₂, LiN (CF₃SO₂)₂, LiN (CF₃SO₂)(C₄F₉SO₂), LiN (C₂F₅SO₂)₂, etc.), lithium halides (LiCl, LiBr, LiI, etc.), and the like can be used. A kind of lithium salt may be used singly, or two or more kinds thereof may be used in combination.

The electrolyte may have a lithium salt (other than organic sulfuric acid salt and fluorosulfonic acid salt) concentration of 1 mol/liter or more and 2 mol/liter or less, or 1 mol/liter or more and 1.5 mol/liter or less. With the lithium salt concentration set to be within the above-described range, an electrolyte having an excellent ion conductivity and a suitable viscosity can be prepared. However, the lithium salt concentration is not limited to the above-described range.

The electrolyte may contain other known additives. Examples of the additive include vinylene carbonate, 1,3-propanesultone, methyl benzene sulfonate, cyclohexylbenzene, biphenyl, diphenyl ether, and fluoro benzene.

The content of the components in the electrolyte can be determined by using, for example, high-performance liquid chromatography, gas chromatography-mass spectrometry (GC-MS), NMR, inductively coupled plasma mass spectrometry (ICP-MS), and element analysis.

### [Separator]

A separator is interposed between the positive electrode and the negative electrode. The separator has excellent ion permeability and suitable mechanical strength and electrically insulating properties. As the separator, there may be used, a microporous thin film, a woven fabric, a nonwoven fabric, and the like. The separator is preferably made of polyolefin such as polypropylene and polyethylene.

In an example structure of the non-aqueous electrolyte secondary battery, an electrode group is accommodated in an outer case with a non-aqueous electrolyte, and in the electrode group, the positive electrode and the negative electrode are wound with a separator interposed therebetween. The structure is not limited to this, and other forms of electrode group may be used. For example, a laminated electrode group may be used, in which the positive electrode and the negative electrode are laminated with a separator interposed therebetween. The form of the non-aqueous electrolyte secondary battery is not limited as well, and for example, cylindrical, prismatic, coin, button, and laminated types are used.

FIG. 1 is a schematic partially cutaway oblique view of a prismatic non-aqueous electrolyte secondary battery in an embodiment of the present disclosure. The battery includes a bottomed rectangular battery case 4, and an electrode group 1 and a non-aqueous electrolyte accommodated in the battery case 4. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. The positive electrode current collector of the positive electrode is electrically connected to a rear face of the sealing plate 5 through a positive electrode lead 2. That is, the positive electrode is electrically connected to a battery case 4 also serving as a positive electrode terminal. The periphery of the sealing plate 5 is fitted to the open end of the battery case 4, and the fitting portion is laser welded. The sealing plate 5 has an injection port for a non-aqueous electrolyte, and is plugged with a sealing plug 8 after the injection.

In the following, the present disclosure will be described in detail based on Examples and Comparative Examples, but the present disclosure is not limited to Examples below.

### <Examples 1 to 3>

### [Negative Electrode Production]

SiO and graphite are mixed at a mass ratio of 5:95, and used as a negative electrode active material. The negative electrode active material, sodium carboxy methylcellulose (CMC-Na), styrene-butadiene rubber (SBR), and water were mixed at a predetermined mass ratio to prepare a negative electrode slurry. Next, the negative electrode slurry was applied to a surface of copper foil as the negative electrode current collector, and the coating was dried and then rolled to form a negative electrode mixture layer on both sides of the copper foil.

### [Positive Electrode Production]

For the lithium-containing composite oxide, a lithium-containing transition metal oxide having a layered rock salt type structure, LiNi_{0.8}Co_{0.18}Al_{0.02}O₂(NCA: positive electrode active material), acetylene black (AB: conductive material), and polyvinylidene fluoride (PVdF: binder) were mixed at a mass ratio of NCA: AB: PVdF = 95:2.5:2.5, and a suitable amount of N-methyl-2-pyrrolidone (NMP) was added, and the mixture was stirred, thereby preparing a positive electrode slurry. The positive electrode slurry was applied to both sides of Al foil as the positive electrode current collector, and the coating was dried, and rolled, thereby forming a positive electrode mixture layer on both sides of the Al foil.

### [Preparation of Electrolyte]

To a solvent mixture containing ethylene carbonate (EC), fluoroethylene carbonate (FEC), ethyl methyl carbonate (EMC), and dimethyl carbonate (DMC) at a volume ratio of (EC+ FEC): EMC: DMC = 20:10:70, LiPF₆ was added as a lithium salt, and further sodium ethyl sulfate (NaES) was added as an additive, thereby preparing an electrolyte. The non-aqueous electrolyte had a LiPF₆ concentration of 1.0 mol/liter, and a NaES concentration of 1 mass%.

The ratio of the EC volume Vec to the FEC volume Vfec: Vec/Vfec was changed as shown in Table 1 without changing the total volume of EC and FEC in the solvent mixture.

### [Secondary Battery Production]

A lead tab was attached to each of the positive electrode and negative electrode, and an electrode group was produced by winding the positive electrode and negative electrode in a spiral shape with a separator interposed so that the leads were positioned at the outermost peripheral portion. The electrode group was inserted into an outer case made of a laminate film having aluminum foil as a barrier layer, and dried under vacuum at 105°C for 2 hours, and afterwards, the non-aqueous electrolyte was injected, and the opening of the outer case was sealed, thereby producing secondary batteries A1 to A3.

### <Examples 4 to 7>

Secondary batteries A4 to A7 were produced in the same manner as in Examples 1 to 3, except that in the electrolyte, lithium fluorosulfonate (FSO₃Li) was further added as an additive, and the FSO₃Li concentration in the non-aqueous electrolyte was set to 1 mass%, and the Vec/Vfec ratio was changed as shown in Table 1.

### <Comparative Examples 1 to 5>

Secondary batteries B1 to B5 were produced in the same manner as in Examples 1 to 3, except that in the electrolyte, NaES was not added, and the Vec/Vfec ratio was changed as shown in Table 1.

### <Comparative Example 6>

A secondary battery B6 was produced in the same manner as in Example 3, except that in the electrolyte, NaES was not added, and the FSO₃Li concentration in the electrolyte was set to 1 mass%.

### <Comparative Example 7>

A secondary battery B7 was produced in the same manner as in Examples 1 to 3, except that the Vec/Vfec ratio was set to 20 as shown in Table 1.

### [Evaluation]

### (Capacity Retention Rate)

The batteries obtained above were subjected to constant current charging until the voltage reached 4.2 V at a current of 0.3 It, and thereafter, subjected to constant voltage charging at a constant voltage of 4.2 V until the current reached 0.02 It in an environment of 25°C. Afterwards, constant current discharging was performed at a current of 0.5 It until the voltage reached 2.5 V, and an initial capacity C₀ was determined. Charging and discharging were performed in an environment of 25°C.

The batteries were allowed to stand for 10 minutes between charging and discharging, and charge/discharge were repeated 200 cycles in an environment of 25°C under the above-described charge/discharge conditions, and discharge capacity C₁ at the 200th cycle was obtained. The ratio R₁ = C₁/C₀ of the discharge capacity C₁ relative to the initial capacity C₀ by percentage is determined as the capacity retention rate. The results are shown in Table 1.

### (Quick Charge Index (reaction resistance component))

The reaction resistance was determined by AC impedance measurement under an environment of 25°C for a 100% charged battery (SOC 100%).

**[Table 1]**

| Battery | NaES (mass%) | FSO₃Li (mass%) | Vec/Vfec | R₁(%) 200 Cycle | Quick Charge Index (Reaction resistance relative value) |
|---|---|---|---|---|---|
| A1 | 1 | 0 | 15 | 82.2 | 1.00 |
| A2 | 1 | 0 | 12 | 83.7 | 0.99 |
| A3 | 1 | 0 | 2 | 84.1 | 0.99 |
| A4 | 1 | 1 | 12 | 83.9 | 0.96 |
| A5 | 1 | 1 | 5 | 84.3 | 0.95 |
| A6 | 1 | 1 | 3 | 84.6 | 0.95 |
| A7 | 1 | 1 | 2 | 85.0 | 0.95 |
| B1 | 0 | 0 | 20 | 79.8 | 1.11 |
| B2 | 0 | 0 | 15 | 80.0 | 1.11 |
| B3 | 0 | 0 | 12 | 80.3 | 1.10 |
| B4 | 0 | 0 | 5 | 80.5 | 1.10 |
| B5 | 0 | 0 | 2 | 80.9 | 1.10 |
| B6 | 0 | 1 | 2 | 81.0 | 1.09 |
| B7 | 1 | 0 | 20 | 79.9 | 1.00 |

Table 1 shows that in the batteries B1 to B6 not including NaES, the R₁ value (79.8 to 81(range 1.2)) does not change much even with the change in the Vec/Vfec ratio. A slight improvement is shown with a small change in the Vec/Vfec ratio (that is, when the FEC ratio increases). Meanwhile, in the batteries B7, and A1 to A3 including NaES, when the Vec/Vfec ratio is small, the R₁ value is improved from 79.9 to 84.1 (range 4.2). In the batteries A4 to A7 in which lithium fluorosulfonate is used in combination, the R₁ value improved even more to 85.0.

Table 1 shows that comparing the batteries B 1 to B7, the battery B7 including NaES showed the quick charge index of 1.00, significantly improved compared with the batteries B 1 to B6 not including NaES. In the batteries B1 to B6 not including NaES, even when the Vec/Vfec ratio is changed, the quick charge index showed almost no change. Meanwhile, the batteries A1 to A3 including NaES kept the same level of quick charge index as that of the battery B7. That is, in the batteries A1 to A3, similarly with the battery B7, the positive electrode resistance is decreased while improving the battery durability. In the batteries A4 to A7, despite even more decrease in the positive electrode resistance, the battery durability improved even more.

Comparison of the battery B5 with B6 shows that adding lithium fluorosulfonate (FSO₃Li) singly as an additive has almost no effect on the R₁ value and the quick charge index. Meanwhile, comparison of the battery A3 with A7 shows that use of NaES and lithium fluorosulfonate in combination showed that the R₁ value significantly increased and the quick charge index significantly improved.

### [Industrial Applicability]

The non-aqueous electrolyte secondary battery of the present disclosure is useful in applications where quick charge performance and durability are required, for example, a main power source for mobile communication devices, mobile electronic devices, electric vehicles, and hybrid vehicles.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug

## Claims

1. A non-aqueous electrolyte secondary battery comprising a positive electrode, a negative electrode, a separator interposed between the positive electrode and the negative electrode, and an electrolyte, wherein
the electrolyte includes an organic sulfuric acid salt represented by a formula (1): (R-O-SO₃)ₙX1,
where R is an organic group with 1 or more carbon atoms, X1 is a cation, and n is an integer of 1 to 3,
the electrolyte further includes ethylene carbonate and fluoroethylene carbonate, and 0.1 ≤ Vec/Vfec ≤ 15 is satisfied, the Vec being an ethylene carbonate volume and the Vfec being a fluoroethylene carbonate volume.

2. The non-aqueous electrolyte secondary battery of claim 1, wherein 0.1 ≤ Vec/Vfec ≤ 12 is satisfied.

3. The non-aqueous electrolyte secondary battery of claim 2, wherein 0.1 ≤ Vec/Vfec ≤ 5 is satisfied.

4. The non-aqueous electrolyte secondary battery of claim 3, wherein 0.1 ≤ Vec/Vfec ≤ 4 is satisfied.

5. The non-aqueous electrolyte secondary battery of claim 4, wherein 0.1 ≤ Vec/Vfec ≤ 2 is satisfied.

6. The non-aqueous electrolyte secondary battery of any one of claims 1 to 5, wherein the X1 is an alkali metal ion or NH₄⁺.

7. The non-aqueous electrolyte secondary battery of any one of claims 1 to 6, wherein the R is an alkyl group with 1 or more and 6 or less carbon atoms.

8. The non-aqueous electrolyte secondary battery of claim 7, wherein the R is a methyl group or an ethyl group.

9. The non-aqueous electrolyte secondary battery of any one of claims 1 to 8, wherein the electrolyte contains 0.1 mass% or more and 5 mass% or less of the organic sulfuric acid salt.

10. The non-aqueous electrolyte secondary battery of any one of claims 1 to 9, wherein the electrolyte further includes a fluorosulfonic acid salt represented by a formula (2): (F-SO₃)ₘX2,
where X2 is a cation, and m is an integer of 1 to 3,
the electrolyte contains 0.5 mass% or more and 5 mass% or less of the fluorosulfonic acid salt.

11. The non-aqueous electrolyte secondary battery of claim 10, wherein the X2 is an alkali metal ion or NH₄⁺.

12. The non-aqueous electrolyte secondary battery of any one of claims 1 to 11, wherein the positive electrode includes a lithium-containing composite oxide having a layered rock salt type crystal structure, and in which 80 atom% or more of metals other than lithium is nickel.
